(19) **Europäisches Patentamt**
**European Patent Office**
**Office européen des brevets**

(11) **EP 4 718 709 A1**

(12) **EUROPEAN PATENT APPLICATION**

(43) Date of publication:
01.04.2026 Bulletin 2026/14

(21) Application number: 25204737.8

(22) Date of filing: 25.09.2025

(51) International Patent Classification (IPC):
*H02P 6/08* (2016.01)   *B62D 5/04* (2006.01)
*B62D 6/08* (2006.01)   *H02K 7/116* (2006.01)
*H02K 11/24* (2016.01)   *H02P 7/00* (2016.01)
*B62D 6/00* (2006.01)

(52) Cooperative Patent Classification (CPC):
**H02P 6/08; B62D 5/0415; B62D 6/10; G01L 5/221;**
**H02K 7/116; H02K 11/21; H02K 11/24; H02P 7/00;**
B62D 5/006; H02P 2205/05

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 25.09.2024 IT 202400021326

(71) Applicant: **Meccanica 42 S.r.l.**
**50129 Firenze (IT)**

(72) Inventors:
• **ANNICCHIARICO, Claudio**
**50129 Firenze (IT)**
• **NANNONI, Francesco**
**50129 Firenze (IT)**

(74) Representative: **Cicconetti, Andrea**
**Accapi S.r.l.**
**Via de' Griffoni, 10/A**
**40123 Bologna (IT)**

(54) **METHOD FOR DRIVING A DEVICE WITH FEEDBACK CONTROL**

(57)     A method for feedback control of a device (50; 150) by means of a feedback-controlled driving system (1) comprising a first shaft (2) and a second shaft (3) rotatable about a rotation axis (X) and interconnected by a torsion bar (4); a rotary electric motor (10) provided with a stator (11) and a rotor (12) connected to the first shaft (2); and sensor means (6, 7) for measuring a phase angle ($\Delta\theta$) between the first shaft (2) and the second shaft (3); the method comprises, at each operating time $t\_i$, the steps of: applying to the second shaft (3), by means of the control element (40), a control torque ($Ca\_i$) so as to rotate the second shaft (3) by a rotation angle ($\theta\_i$) (step F1); detecting and measuring, by means of the sensor means (6, 7), the rotation angle ($\theta\_i$) and sending a relative signal to said device (50; 150) (step F2); receiving from the device (50; 150) a signal relating to an operating torque ($Cr\_i$)) to be used on the control element (40), in particular as a function of the rotation angle ($\theta\_i$) (step F3); detecting and measuring, by means of the sensor means (6, 7), a phase angle ($\Delta\theta\_i$) between the first shaft (2) and the second shaft (3) and equal to a torsion angle ($\gamma\_i$) of the torsion bar (4) (step F4); calculating, on the basis of the stiffness characteristics (k) of the torsion bar (4), an operating torsion angle ($\gamma r\_i$) necessary to apply on the control element (40) a feedback torque equal to the operating torque ($Cr\_i$) (step F5); controlling the rotary electric motor (10) to apply on the first shaft (2) a driving torque ($Cm\_i$) (step F6) such as to change in a subsequent time $t\_{i+i}$ the phase angle ($\Delta\theta\_i$) to a value ($\Delta\theta\_i+1$) substantially equal to that of the operating torsion angle ($\gamma r\_i$) of the torsion bar (4) (step F7); repeating the steps from F1 to F7 for a subsequent time $t\ i+1$.

**EP 4 718 709 A1**

**Fig. 5**

**Description**

The invention relates to systems and methods for feedback control of devices such as steering boxes of remotely controlled vehicles, driving simulation devices.

Feedback-controlled driving systems, referred to as servomechanisms or servo systems, are known, in which an actuator is feedback controlled so that the output or delivered value such as position, speed, force, or torque, used to operate a device tends, during operation, to match a setpoint or input value. More precisely, the value delivered by the actuator is measured either continuously or at predetermined and regular time intervals by appropriate sensors and is compared by a control unit with the setpoint value. In the event of a difference between the output value and the setpoint value, the control unit acts on the actuator to eliminate the discrepancy.

In the event that the setpoint value is modified during operation, for example manually by an operator, additional sensor means are required to detect such variation and communicate it to the control unit in order to act on the actuator.

The actuator can be electric, hydraulic or pneumatic.

In the steering systems, or steering gears, of a vehicle, servo systems are widely used to drive the steering box, also referred to as steering gear or steering housing, which is the device that transfers the steering commands, generally imparted via the vehicle's steering wheel, to the vehicle's steering or steerable wheels. Mechanical steering boxes allow the rotary motion imparted by the driver through the steering column, operated via the steering wheel, to be converted into a linear motion, which is transferred to the steering tie rods that act on the steerable wheels.

In steering systems equipped with an electric servo system, also known as electric power steering systems, an electric motor acts on the steering box to move the steering tie rods. The motor is continuously controlled by a control unit based on the angular position of the steering column, as measured by appropriate sensors. Additional sensors are provided to measure the angular or linear displacement performed by the electric motor so as to allow the control unit a comparison with the angular position of the steering column for any corrections.

US 2019/0217882 describes an electric servo assistance device for the steering system of a motor vehicle comprising a steering column shaft, a housing and an electric motor provided with a rotor connected to the steering column shaft and a stator fixed to the housing. The stator is arranged in radial direction with respect to the rotor. The device works adaptively to ensure that the steering is more assisted during a parking procedure, while in case of higher driving speeds the steering is less assisted to avoid oversteering.

Such feedback-controlled driving system or servo systems provided with an electric actuator are, however, not capable of providing feedback control of devices such as steering boxes of remotely controlled vehicles or driving simulation devices.

It is an object of the present invention to improve methods for the feedback control of devices such as steering boxes of remotely controlled vehicles, driving simulation devices. Another object is to provide a method for accurately and precisely controlling, in feedback mode, the steering box of a remotely operated vehicle or a simulation device, by means of an electric driving system.

These objects and others are achieved by a method for feedback control of a device according to claim 1.

The invention can be better understood and implemented with reference to the attached drawings which illustrate an exemplifying and non-limiting embodiment thereof, in which:

- Figure 1 is a schematic front view of a feedback-controlled driving system;
- Figure 2 is a schematic front view of a variant of the feedback-controlled driving system;
- Figure 3 is a schematic view of the driving system of the invention associated with a device to be driven with feedback control;
- Figure 4 is a schematic view of the driving system of the invention associated with a device to be controlled remotely and in feedback;
- Figure 5 is a flowchart illustrating the operational steps of the control method of the invention.

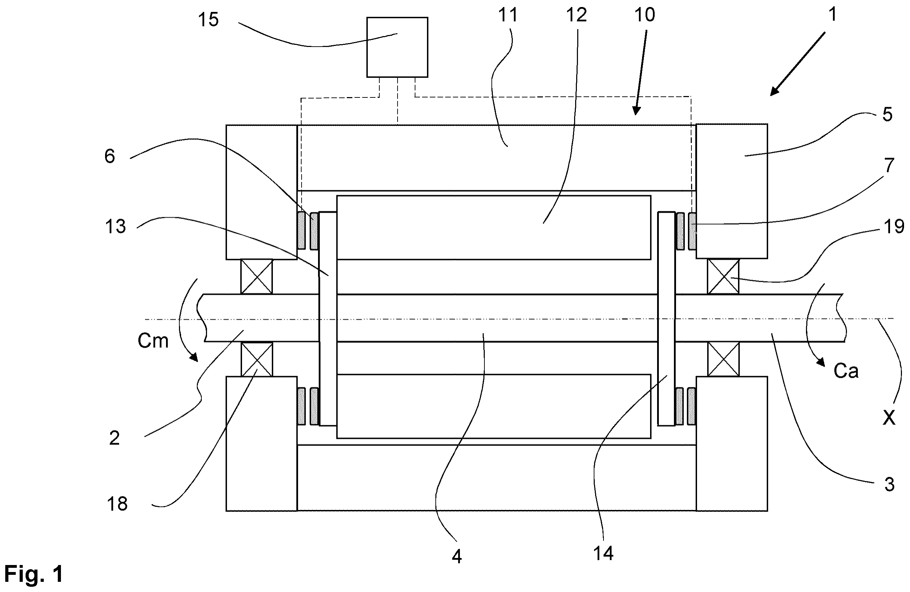

With reference to Figure 1, a feedback-controlled driving system 1 is illustrated which comprises a first shaft 2 and a second shaft 3 rotatable about a rotation axis X and interconnected by a torsion bar 4 coaxial thereto, in particular so as to form a single body element elongated longitudinally along the rotation axis X having end portions constituted respectively by the first shaft 2 and by the second shaft 3 and a central portion constituted by the torsion bar 4.

The torsion bar 4 comprises an element, for example tubular, elongated longitudinally parallel to the rotation axis X, in particular having a circular cross-section, having a defined length L and a defined and known torsional stiffness k. By length L is meant the longitudinal extension of the torsion bar 4.

The driving system 1 also includes a rotary electric motor 10, in particular of a known type and not described in detail, comprising a stator 11 and a rotor 12, the latter coaxial and arranged about the shafts 2, 3 and/or the torsion bar 4 and connected to the first shaft 2 to apply a contrast torque Cm thereto, where "torque" refers to a pair of forces, that is, a torsional moment.

More precisely, the rotor 12 is fixed to a first connection element 13, connected to, and interposed between, the end of the first shaft 2 and the torsion bar 4. Similarly, a second connection element 14 is connected to and interposed between, the end of the second shaft 3 and the torsion bar 4.

The driving system 1 comprises supporting means 5 arranged to support the rotary electric motor 10 and to rotatably sustain the first shaft 2 and the second shaft 3 about the rotation axis X, in particular by means of bearing means. More precisely, at least one first bearing 18, for example of the rolling type, is fixed to the supporting means 5 and rotatably supports the first shaft 2 and at least one second bearing 19, for example of the rolling type, is fixed to the supporting means 5 and rotatably supports the second shaft 3.

First sensor means 6 and second sensor means 7 are provided to measure a rotation about the rotation axis X respectively of the first shaft 2 and the second shaft 3, in particular to detect and measure a phase angle $\Delta\theta$ between the first shaft 2 and the second shaft 3 that is substantially equal to a torsion angle $\gamma$ to which the torsion bar 4 is subjected.

The first sensor means 6 and the second sensor means 7 comprise respective angular position transducers (e.g. an encoder) of known type and not described in detail.

The first sensor means 6 are associated, for example, with the first connection element 13 of the first shaft 2 and the second sensor means 7 are associated, for example, with the second connection element 14 of the second shaft 3.

The driving system 1 further comprises a control unit 15 connected to the first and second sensor means 6, 7 and to the rotary electric motor 10 and configured to control the rotary electric motor 10 so as to change the contrast torque Cm on the basis of the phase angle $\Delta\theta$ measured by the sensor means 6, 7 as better explained in the following description.

The mechanical characteristics of the torsion bar 4 comprise its torsional stiffness k, and the torsion angle to $\theta$ which it is subjected, the torsion bar 4 is a function of the control torque Ca and the torsional stiffness k of the torsion bar 4 according to the well-known formulas:

$$\gamma = Ca \,/\, k \qquad (eq.\ 1)$$

$$k = (Jp \cdot G)/L \qquad (eq.\ 2)$$

wherein:

Jp: polar moment of inertia of a cross-section of the torsion bar 4;
G: tangential elasticity modulus of the torsion bar 4;
L: length L of the torsion bar 4 along the rotation axis X.

The torsion bar 4 and the sensor means 6, 7 thus form a torsion meter device capable of measuring the torque exerted on the shafts 2, 3.

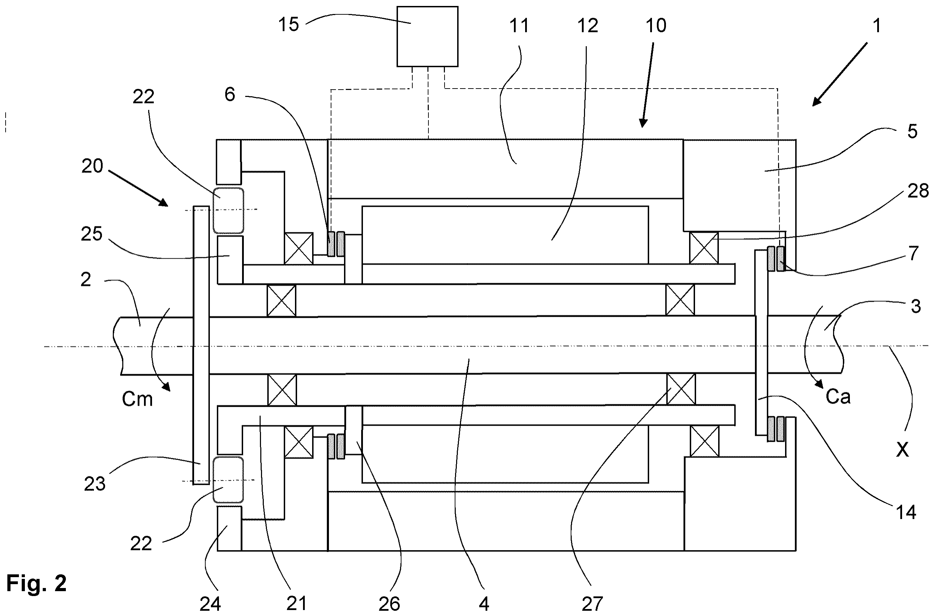

With particular reference to Figure 2, a variant of the driving system 1 of the invention is illustrated, which differs from the embodiment described and illustrated in Figure 1 in that it comprises a speed reducer 20 interposed between the first shaft 2 and the rotor 12 of the rotary electric motor 10, for example to increase or decrease the torque exerted by the rotary electric motor 10 on the first shaft 2.

In particular, in the illustrated embodiment, the speed reducer 20 comprises an epicyclic reducer including an input shaft 21 connected to the rotor 12 and arranged to drive in rotation a plurality of planet gears 22 mounted on a planet gear carrier 23 and engaging with a ring gear 24 fixed to the supporting means 5, the planet gear carrier 23 being connected to the first shaft 2. In particular, the input shaft 21 is provided at one end with a central gear 25 (sun gear) that engages with the planet gears 22.

The input shaft 21 is hollow and houses the torsion bar 4, which is connected at its two ends to the first shaft 2 and the second shaft 3, respectively. In particular, the torsion bar 4 is rotatably supported by the input shaft 21 for example by means of a pair of third bearings 27, for example of the rolling type, while the input shaft 21 is in turn rotatably supported by the supporting means 5 by means of a pair of fourth bearings 28 for example of the rolling type.

In this embodiment, the first sensor means 6 are associated, for example, with a third connection element 26 of the input shaft 21 to which the rotor 12 is also connected and the second sensor means 7 are associated with the second connection element 14 of the second shaft 3.

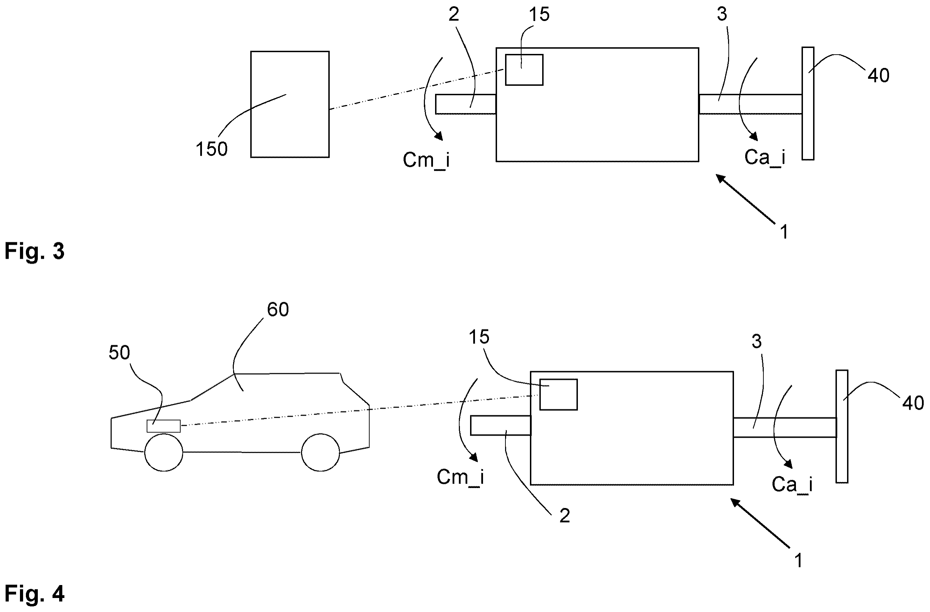

With reference to Figure 3, the driving system 1 of the invention is associated with a driving simulation device 150 and for this purpose, the first shaft 2 is connected to and driven only by the rotary electric motor 10, while the second shaft 3 is connected to and driven by a control element 40, for example a steering wheel operated by a user interacting with the driving simulation device.

The driving system 1 is connected to the device 150 to receive from the latter a signal relating to an operating torque Cr set on said device 50 and to be used on the control element 40, wherein the operating torque Cr is also a function of a rotation angle of $\theta$ the second shaft 3 obtained by acting on the control element 40.

With reference to Figure 4, the driving system 1 of the invention is associated with a device 50, for example the steering box of a vehicle 60, to control the latter, for instance remotely and in feedback. Also in this case, the first shaft 2 is connected and operated only by the rotary electric motor 10, while the second shaft 3 is connected to and operated by a control element 40, for example a steering wheel operated by a user.

The driving system 1 is remotely connected with the device 50 to receive signals from the latter relating to an operating torque Cr set on said device 50 and is also a function of a rotation angle of θ the second shaft 3 obtained by acting on the control element 40. The value of the operating torque Cr set on the device 50 can also be a function of a plurality of internal/external parameters, such as speed, lateral acceleration, yaw rate, a contact force between vehicle wheels and the road, environmental temperature, etc.

The remote connection between the driving system 1 and the device 50 takes place through known signal transmission devices mounted on the device 50 and/or on the vehicle 60, and associated with the driving system 1, in particular connected to the control unit 15.

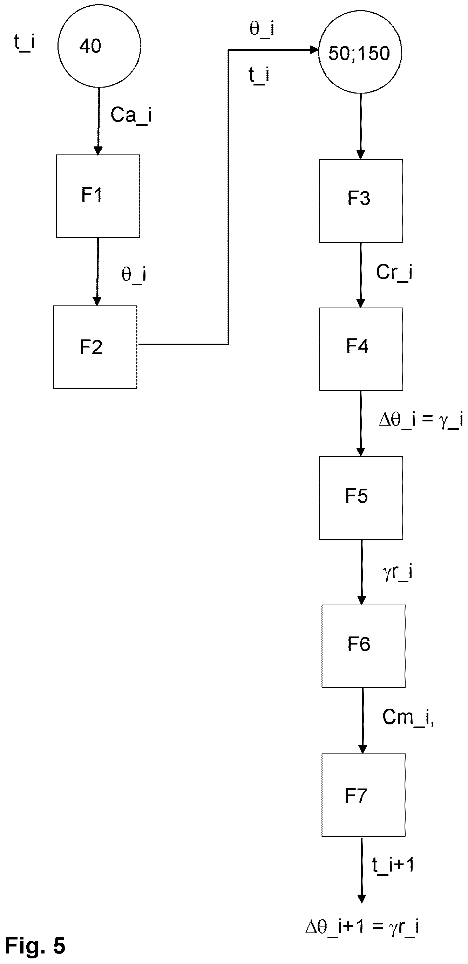

With particular reference to Figure 5 and Figures 3 and 4, the method of the invention for feedback control of a device 50; 150 by means of the feedback-controlled driving system 1 described above and illustrated in Figures 1 and 2, comprises, for each time $t\_i$ of operation of the driving system 1 and the device 50, 150, with the integer $i \geq 1$, the following steps:

- applying to the second shaft 3 via the control element 40, a control torque $Ca\_i$ so as to rotate the second shaft 3 by a rotation angle $\theta\_i$ (step F1);
- detecting and measuring by the sensor means 6, 7 said rotation angle $\theta\_i$ and sending a signal relating to said rotation angle $\theta\_i$ to said device 50; 150 (step F2);
- receiving from the device 50; 150 a signal relating to an operating torque $Cr\_i$ to be used on said control element 40 and which is a function of said rotation angle $\theta\_i$ (step F3);
- detecting and measuring by the sensor means 6, 7 a phase angle $\Delta\theta\_i$ between the first shaft 2 and the second shaft 3, wherein said phase angle $\Delta\theta\_i$ is equal to a torsion angle $\gamma\_i$ of the torsion bar 4 at time $t\_i$ (step F4);
- calculating, on the basis of the stiffness characteristics k of said torsion bar 4, an operating torsion angle $\gamma r\_i$ necessary to apply on said control element 40 a torque equal to the operating torque $Cr\_i$ (step F5);
- controlling the rotary electric motor 10 to apply on the first shaft 2 a driving torque $Cm\_i$ (step F6) such as to modify at a subsequent time $ti+1$ said phase angle $\Delta\theta\_i$ to a value $\Delta\theta\_i+1$ substantially equal to said operating torsion angle $\gamma r\_i$ of the torsion bar 4 (step F7);
- repeating steps F1 through F6 for a next time $ti+1$.

The control torque $Ca\_i$ has a modulus greater than or equal to zero ($|Ca\_i| \geq 0$); in particular it is equal to zero ($Ca\_i = 0$), when the control element 40 is not operated by the user and in this case the rotation angle $\theta\_i$ of the second shaft 3 set by the control element 40 is also equal to zero ($\theta\_i = 0$).

In the next operating time $ti+1$ the method provides for detecting and measuring by the sensor means 6, 7 a rotation angle $\theta\_i+1$ of the second shaft 3 due to the application on the control element 40 of a control torque $Ca\_i+1$ other than zero and/or due to any effects of the application of the driving torque $Cm\_i$ on the first shaft 2 through the torsion bar 4. The value of the phase angle $\Delta\theta\_i+1$ between the first shaft 2 and the second shaft 3 is equal to a torsion angle $\gamma\_i+1$ from the torsion bar 4, i.e. equal to the operating torsion angle $\gamma r\_i$ obtained by applying the driving torque $Cm\_i$ to the first shaft 2 at the time $t\_i$ (step F6). The value of the operating torque $Cr\_i$ controlled by the device 50 is calculated in addition to the value of the rotation angle $\theta\_i$ of the second shaft 3, based on the value of a plurality of internal/external parameters, such as speed, lateral acceleration, yaw rate, a contact force between road and wheels of the vehicle with which the device is associated, environmental temperature, etc.

The value of the operating torsion angle $\gamma r\_i$ necessary to apply a torque equal to the operating torque $Cr\_i$ on the control element 40 can be calculated by means of the formula (eq. 1):

$$\gamma r_i = Cr\_i \, / \, k \qquad \text{(eq. 1')}$$

where k is the torsional stiffness of the torsion bar 4.

With the same formula, the driving torque $Cm\_i$ that the rotary electric motor 10 must apply on the first shaft 2 to generate the phase angle $\Delta\theta\_i+1$ can be calculated.

Thanks to the method of the invention, it is therefore possible, by means of the feedback-controlled driving system 1 of Figures 1 or 2, to accurately, precisely and in real time feedback-control a device such as a steering box 50 of a remotely controlled vehicle or a driving simulation device 150.

In particular, it is possible to feedback change the control torque $Ca\_i$ initially applied by the user to the control element 40 of the driving system 1 by applying to it a feedback torque equal to the operating torque $Cr\_i$ controlled by the device 50, 150 and calculated as a function of the value of the rotation angle $\theta\_i$ of the second shaft 3 measured by the sensor means 6, 7. More precisely, the feedback torque is applied to the control element 40 by controlling the rotary electric motor 10 so as to apply to the first shaft 2 a driving torque $Cm\_i$ such as to modify the initial phase angle $\Delta\theta\_i$ between the first and second shaft 2, 3 to a value equal to an operating torsion angle $\gamma r\_i$ of the torsion bar 4 that allows to apply the aforementioned feedback torque on the control element 40.

**Claims**

1. Method for feedback control of a device (50; 150) by means of a feedback-controlled driving system (1) comprising:

- a first shaft (2) and a second shaft (3) rotatable about a rotation axis (X) and interconnected by a torsion bar (4), wherein said second shaft (3) is connected to, and can be driven by, a control element (40);
- a rotary electric motor (10) comprising a stator (11) and a rotor (12) that is connected to said first shaft (2);
- sensor means (6, 7) for measuring a rotation about the rotation axis (X) of the first shaft (2) and the second shaft (3) and a phase angle ($\Delta\theta$) between the first shaft (2) and the second shaft (3) almost equal to a torsion angle ($\gamma$) of the torsion bar (4)

said method comprising at each time $t_i$ of operation, with the integer $i \geq 1$, the following steps:

- applying a control torque ($Ca_i$) to the second shaft (3) through the control element (40) so as to rotate the second shaft (3) by a rotation angle ($\theta_i$) (step F1);
- detecting and measuring, by the sensor means (6, 7), said rotation angle ($\theta_i$) and sending a signal relating to said rotation angle ($\theta_i$) to said device (50; 150) (step F2);
- receiving from the device (50; 150) a signal relating to an operating torque ($Cr_i$) to be used on said control element (40), in particular as a function of said rotation angle ($\theta_i$) (step F3);
- detecting and measuring by the sensor means (6, 7) an phase angle ($\Delta\theta_i$) between the first shaft (2) and the second shaft (3), wherein said phase angle ($\Delta\theta_i$) is substantially equal to a torsion angle ($\gamma_i$) of the torsion bar (4) (step F4);
- calculating, on the basis of stiffness characteristics (k) of said torsion bar (4), an operating torsion angle ($\gamma r_i$) necessary to apply on said control element (40) a feedback torque equal to the operating torque ($Cr_i$) (step F5);
- controlling the rotary electric motor (10) to apply a driving torque ($Cm_i$) on the first shaft (2) (step F6) such as to modify in a subsequent time $t_{i+1}$ the phase angle ($\Delta\theta_i$) to a value ($\Delta\theta_i+1$) substantially equal to that of said operating torsion angle ($\gamma r_i$) of the torsion bar (4) (step F7);
- repeating steps F1 through F7 for a subsequent time $t_i+1$.

2. Method according to claim 1, wherein said control torque ($Ca_i$) has a modulus greater than or equal to zero.

3. Method according to claim 1 or 2, wherein said device comprises a steering box (50) of a remotely controlled vehicle or a driving simulation device (150) and said control element (40) comprises a steering wheel.

4. Method according to any preceding claim, wherein said feedback-controlled driving system (1) comprises a control unit (15) connected to:

- said device (50; 150) for receiving from the latter signals relating to an operating torque ($Cr_i$) controlled by said device (50);
- said first and second sensor means (6, 7) for receiving from the latter signals relating to a rotation angle ($\theta_i$) of said second shaft (3) and to a phase angle ($\Delta\theta_i$) between the first shaft (2) and the second shaft (3);
- said rotary electric motor (10) to control it so as to modify said contrast torque ($Cm_i$) on the basis of the value of said operating torsion angle ($\gamma r_i$).

5. Method according to one of the preceding claims, wherein said feedback-controlled driving system (1) comprises a speed reducer (20) interposed between said first shaft (2) and the rotor (12) of said rotary electric motor (10).

6. Method according to claim 4, wherein said speed reducer (20) comprises an input shaft (21) connected to said rotor (12) and arranged to set in rotation, by means of a central gear (25), a plurality of planet gears (22) mounted on a planet gear carrier (23) and engaged with a ring gear (24) fixed to said supporting means (5), said planet gear carrier (23) being connected to said first shaft (2).

Fig. 1

**Fig. 2**

EP 4 718 709 A1

Fig. 3

Fig. 4

t_i (40)

$\theta$_i

t_i

(50;150)

Ca_i

F1

$\theta$_i

F2

F3

Cr_i

F4

$\Delta\theta$_i = $\gamma$_i

F5

$\gamma$r_i

F6

Cm_i,

F7

t_i+1

$\Delta\theta$_i+1 = $\gamma$r_i

**Fig. 5**

# EUROPEAN SEARCH REPORT

**Application Number**

EP 25 20 4737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/217882 A1 (FIGURA MICHAEL GEORG [DE] ET AL) 18 July 2019 (2019-07-18)<br>* the whole document *<br>----- | 1-6 | INV.<br>H02P6/08<br>B62D5/04<br>B62D6/08 |
| A | US 2005/155812 A1 (YAMAMORI MOTOYASU [JP] ET AL) 21 July 2005 (2005-07-21)<br>* the whole document *<br>----- | 1-6 | H02K7/116<br>H02K11/24<br>H02P7/00<br>B62D6/00 |
| A | Anonymous: "Torsion constant - Wikipedia",<br>,<br>29 February 2024 (2024-02-29),<br>XP093260910,<br>Retrieved from the Internet:<br>URL:https://en.wikipedia.org/w/index.php?title=Torsion_constant&oldid=1211063338<br>[retrieved on 2025-03-18]<br>* the whole document *<br>----- | 1-6 | |
| X | US 2019/217885 A1 (FIGURA MICHAEL GEORG [DE] ET AL) 18 July 2019 (2019-07-18)<br>* the whole document *<br>----- | 1-6 | TECHNICAL FIELDS SEARCHED (IPC)<br><br>H02P |
| A | CN 116 902 066 A (BEIJING INSTITUTE TECH) 20 October 2023 (2023-10-20)<br>* the whole document *<br>----- | 1-6 | B62D<br>H02K |
| A | US 2006/047391 A1 (KATOU YUUSUKE [JP]) 2 March 2006 (2006-03-02)<br>* the whole document *<br>----- | 1-6 | |
| A | US 9 683 639 B2 (SHOWA CORP [JP]) 20 June 2017 (2017-06-20)<br>* the whole document *<br>----- | 1-6 | |

The present search report has been drawn up for all claims

| Place of search | Date of completion of the search | Examiner |
|---|---|---|
| Munich | 15 January 2026 | Wimböck, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 4737

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | | Publication date | Patent family member(s) | | Publication date |
|---|---|---|---|---|---|---|
| US 2019217882 | A1 | | 18-07-2019 | CN | 110040174 A | 23-07-2019 |
| | | | | DE | 102018200522 A1 | 18-07-2019 |
| | | | | US | 2019217882 A1 | 18-07-2019 |
| US 2005155812 | A1 | | 21-07-2005 | DE | 602004003081 T2 | 06-06-2007 |
| | | | | EP | 1459959 A2 | 22-09-2004 |
| | | | | EP | 1666332 A1 | 07-06-2006 |
| | | | | US | 2004182637 A1 | 23-09-2004 |
| | | | | US | 2005155812 A1 | 21-07-2005 |
| US 2019217885 | A1 | | 18-07-2019 | CN | 110040172 A | 23-07-2019 |
| | | | | DE | 102018200523 A1 | 18-07-2019 |
| | | | | US | 2019217885 A1 | 18-07-2019 |
| CN 116902066 | A | | 20-10-2023 | NONE | | |
| US 2006047391 | A1 | | 02-03-2006 | CN | 1743216 A | 08-03-2006 |
| | | | | DE | 102005041086 A1 | 09-03-2006 |
| | | | | JP | 4379261 B2 | 09-12-2009 |
| | | | | JP | 2006062624 A | 09-03-2006 |
| | | | | US | 2006047391 A1 | 02-03-2006 |
| US 9683639 | B2 | | 20-06-2017 | CN | 105936292 A | 14-09-2016 |
| | | | | EP | 3064413 A1 | 07-09-2016 |
| | | | | JP | 2016159895 A | 05-09-2016 |
| | | | | US | 2016258516 A1 | 08-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190217882 A